# EUROPEAN PATENT SPECIFICATION

(11) **EP 3 012 705 B1**
(45) Date of publication and mention of the grant of the patent: **11.01.2017**
(21) Application number: 14189898.1
(22) Date of filing: 22.10.2014
(51) Int. Cl.: G05D 16/20, G05D 7/06, G05D 7/01, F24D 19/10

(54) **Heat exchanger valve arrangement, heating system and method for operating a heating system**
Wärmetauscherventilanordnung, Heizsystem und Verfahren zum Betrieb eines Heizsystems
Agencement de soupape d'échangeur de chaleur, système de chauffage et procédé pour faire fonctionner un tel système

(43) Date of publication of application: 27.04.2016
(73) Proprietor: Danfoss A/S, 6430 Nordborg (DK)
(72) Inventor: Thybo, Claus, 6400 Sønderborg (DK)
(74) Representative: Knoblauch, Andreas

(56) References cited:
- EP-B1- 1 353 254
- WO-A1-89/06774
- US-A- 3 209 721
- US-A- 4 172 971

## Description

The invention relates to a heat exchanger valve arrangement having a pressure control valve, said pressure control valve comprising a valve element cooperating with a throttling element and controlling a differential pressure.

Furthermore, the present invention relates to a heating system comprising a feed line arrangement, a return line arrangement and a circulation pump means controlled by a controller and connected to said feed line arrangement, and at least two heat exchangers connected to said feed line arrangement and said return line arrangement.

Furthermore, the invention relates to a method for operating a heating system, said heating system comprising a feed line arrangement, a return line arrangement and a circulation pump means controlled by a controller and connected to said feed line arrangement and at least two heat exchangers connected to said feed line arrangement and said return line arrangement.

A heat exchanger valve of the kind mentioned above is known, for example, from EP 1 353 254 B1. In this known valve the pressure control valve is located upstream said flow control valve. The pressure control valve comprises a hollow piston which is connected to a membrane and loaded by the force of a spring in a direction in which the piston is moved away from the throttling element and towards a valve seat of the flow control valve. The interior of the piston forms an intermediate region in which the pressure is lower than at an input of the valve arrangement. The membrane is loaded by the pressure in this intermediate region in a direction towards the throttling element. The other side of the membrane is loaded by a pressure downstream the flow control valve. Therefore, the differential pressure over the flow control valve corresponds to the force of the spring. Such a valve arrangement has the advantage that the flow through the valve arrangement is dependent only on the opening degree of the flow control valve which makes control of the flow simple in a heating system in which a plurality of heat exchanger is used. All heat exchanger valve arrangements can show the same control behavior independent from a length of the piping between the circulation pump of the heating system and the heat exchanger.

The circulation pump has to produce a pressure which is sufficient to supply all heat exchangers with a sufficient amount of heat carrier medium, thus requiring a lot of pump energy. The pump energy consumption depends greatly on the needed differential pressure or pump head it needs to deliver.

The object underlying the invention is to provide means with which pump energy of a heating system can be kept low.

This object is solved with a heat exchanger valve arrangement described at the outset in that detecting means are provided detecting whether said differential pressure exceeds a predetermined minimum value.

Such a valve arrangement can be used to detect whether a differential pressure is high enough for certain purposes. If this is not the case, the detecting means can, for example, give a signal to a pump to increase the pressure so that the pressure differential can again increase to exceed the predetermined minimum value.

In a preferred embodiment a flow control valve is connected in series with said pressure control valve, said pressure control valve controlling the differential pressure over said flow control valve. In this case the flow through the flow control valve depends only on the distance between the valve element and the valve seat of the flow control valve.

As described above, the construction of the heat exchanger valve arrangement with a flow control valve and a pressure control valve has the purpose to keep the differential pressure or pressure difference over the control valve constant. However, this makes it necessary that the pressure over the total valve arrangement is high enough to allow control of the differential pressure. When the pressure difference over the valve arrangement in total, i. e. the pressure difference between the inlet and the outlet of the valve arrangement, is smaller than the predetermined minimum value, no control of the differential pressure over the flow control valve is possible. This fact can easily be detected by the detecting means. When the detecting means detect that the differential pressure does not exceed the predetermined minimum value it is clear that the heat exchanger valve arrangement is not sufficiently supplied with heat carrier medium. This can be signaled to the pump which can increase the outputted pressure. If, on the other hand, all heat exchanger valve arrangements show that the differential pressures exceed the predetermined value that pump pressure can be lowered.

In a preferred embodiment said valve element is loaded by a spring force of a spring in one direction and by said differential pressure in a direction opposite to the direction of the spring, wherein said minimum value corresponds to a minimum of said spring force. In other words, if the differential pressure alone would act on the valve element, it would create the same force as the spring force of said spring in its most extended condition. Since the spring force is known, it is easy to fix the predetermined minimum value.

Preferably said detecting means comprise a position sensor. In this case it is not necessary to use a differential pressure sensor or pressure switch which would be less cost effective.

In a preferred embodiment said detecting means comprise a Hall sensor. A Hall sensor produces an electric signal depending on a distance to a magnet. It is not required that the position sensor has a high accuracy. In general, it is sufficient when the position sensor can give a yes / no information, in other words if it can be determined whether the valve element rests against a stop or is away from the stop.

Here, it is preferred that said detecting means comprise a magnet, said magnet being connected to said valve element. The magnet does not need any supply lines or signal lines. It can easily be fixed to the valve element.

In a preferred embodiment said position senor outputs a maximum signal in case said valve element has the largest possible distance from said throttling element. Such a maximum signal can easily be detected and gives a reliable information about the fact that the valve element has the maximum distance from the throttling element.

Preferably said valve element is in form of hollow piston connected to a membrane, an interior space of the piston forming an intermediate region, said membrane being loaded by a pressure in said intermediate region in a direction away from said throttling element and by a pressure downstream said flow control valve in a direction towards said throttling element. As a rule the piston is loaded in a direction away from said throttling element by the force of the spring mentioned above. The piston then assumes a position in which the differential pressure over the flow control valve and the force of the piston are in an equilibrium.

The object is solved with a heating system mentioned above in that each heat exchanger is provided with a valve arrangement as described above and said detecting means are connected to said controller.

In this way the detecting means are able to signal to the controller that the pressure of the circulation pump is too low when in at least one heat exchanger valve arrangement the differential pressure has fallen below the predetermined minimum value. In this case the controller can operate the circulation pump to slightly increase the pressure. On the other hand, when in all heat exchanger valve arrangements the differential pressure exceed the predetermined minimum value it might be that the pressure of the heat carrier medium is too high. In this case the controller can operate the circulation pump to lower the produced pressure.

The object is solved with a method for operating a heating system as mentioned above in that the pressure of said circulation pump is lowered until a valve arrangement as described above detects that said differential pressure in this valve arrangement has fallen below said predetermined minimum value and then the pressure of said circulation pump is increased by a predetermined pressure difference.

In this way it is possible to operate the circulation pump with the lowest pump energy consumption.

In this case it is preferred that said pressure difference corresponds to said predetermined minimum value. The pressure of the circulation pump is increased incrementally or step by step. When the pressure difference is increased by said predetermined minimum value and still at least one valve arrangement shows a signal indicating that the predetermined minimum value has not been exceeded, the pressure difference is increased once again by said predetermined minimum value.

A preferred embodiment of the present invention will now be described in more detail with reference to the drawing, wherein:
- Fig. 1: is a schematic illustration of a heating system and
- Fig. 2: is a schematic illustration of a heat exchanger valve arrangement, and
- Fig. 3: is a schematic illustration of another valve arrangement.

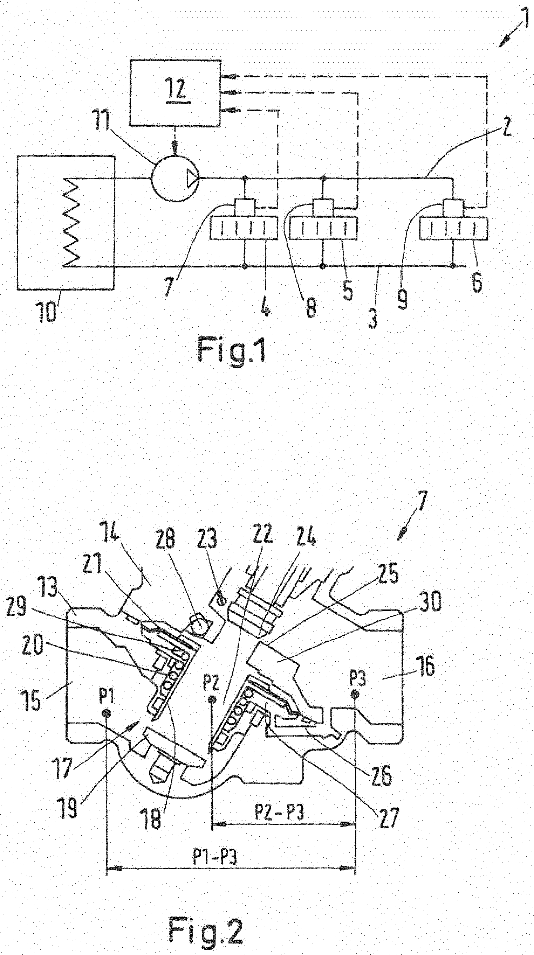

Fig. 1 shows schematically a heating system 1 comprising a feed line arrangement 2 and a return line arrangement 3. A plurality of heat exchanger 4, 5, 6 is connected between the feed line arrangement 2 and the return line arrangement 3. Each heat exchanger 4, 5, 6 is provided with a valve arrangement 7, 8, 9 which will be described in more detail in connection with fig. 2. The feed line arrangement 2 and the return line arrangement 3 are connected to a boiler 10. A circulation pump 11 is arranged in the loop formed by the feed line arrangement 2 and the return line arrangement 3. The circulation pump 11 is controlled by a controller 12.

The circulation pump 11 circulates heat carrier medium, for example heating water, which has been heated in the boiler 10. To this end the circulation pump 11 has to increase the pressure of the heat carrier medium in the feed line arrangement 2. This pressure must be high enough so that all heat exchanger 4, 5, 6 can satisfy their demand.

The energy consumption of the circulation pump depends greatly on the needed differential pressure or pump head it needs to deliver. With regard to the pump energy consumption it is optimal to reduce the pump head to a minimum, where all valve arrangements 7, 8, 9 can deliver the needed flow. To this end it is necessary that all valve arrangements 7, 8, 9 receive heat carrier medium with sufficient pressure.

As the pressure drop in the heating system varies depending on the pressure drop in the pipings and in the heat exchangers, it is normally not possible to predict the pressure drop over the valve arrangements 7, 8, 9 or to predict which of the valve arrangements 7, 8, 9 will receive the lowest pressure.

Fig. 2 shows schematically the valve arrangement 7. The valve arrangements 7, 8, 9 have the same construction.

The valve arrangement 7 comprises a housing having a first part 13 and a second part 14. The housing has an inlet 15 and an outlet 16. The inlet 15 is connected to the circulation pump 11 by means of the feed line arrangement 2. Heat carrier medium reaching the inlet 15 has a pressure P1.

A pressure control valve 17 is positioned downstream the inlet 15 and comprises a valve element 18 in form of a hollow piston and a throttling element 19.

A spring 20 acts on the valve element 18 in a direction away from the throttling element 19. Furthermore, the valve element 18 is connected to a membrane 21.

The hollow interior of the valve element 18 forms an intermediate region 22. Heat carrier medium in this intermediate region 22 has a pressure P2.

A flow control valve 23 is arranged downstream said pressure control valve 17. The flow control valve 23 comprises a valve element 24 and a valve seat 25. The outlet 16 is arranged downstream the flow control valve 23. Heat carrier medium in the outlet 16 has a pressure P3.

The pressure P2 of the intermediate region 22 acts on the membrane 21 in a direction towards the throttling element 19. The outlet 16 is connected via a channel 26 to a space 27 so that the pressure P3 of the outlet 16 acts on the membrane in a direction opposite to the pressure P2 of the intermediate region 22.

It can be seen that pressure P1 in the inlet 15 is higher than pressure P2 in the intermediate region 22. Pressure P2 in the intermediate region 22 is higher than pressure P3 in the outlet 16.

It can furthermore be derived from fig. 2 that the differential pressure P2-P3 over the flow control valve 23 is the same as the differential pressure P2-P3 over the membrane 21. This differential pressure P2-P3 creates a force on the membrane 21 corresponding to the force of the spring 20. The valve element 8 takes a position in which the differential pressure P2-P3 and the force of the spring 20 are in an equilibrium.

When the pressure P1 at the inlet 15 increases, the pressure P2 in the intermediate region 22 increases as well and shifts the valve element 8 in a directions towards the throttling element 9 so that the pressure P2 in the intermediate region 22 decreases. When the pressure P1 at the inlet 15 decreases, the pressure P2 in the intermediate region 22 decreases as well so that the valve element 18 is moved away from the throttling element 19 by the force of the spring 20 so that the pressure P2 in the intermediate region 22 increases again.

A Hall sensor 28 is arranged in the second part 14 of the housing. A magnet 29 is fixed to the valve element 8, preferably at the end of the valve element 18 facing the flow control valve 23.

The Hall element 28 together with the magnet 29 serve as detecting means for detecting whether the valve element 18 is able to perform the pressure control function or not. In other words, the Hall sensor 28 together with the magnet 29 forms a position sensor outputting a maximum signal in case the valve element 18 has the largest distance from the throttling element 19.

When the circulation pump 11 does not deliver sufficient pressure to the heat exchanger valve means 7, the pressure P1 at the inlet 15 is too low as well. Since the pressure P2 in the intermediate region 22 cannot be larger than the pressure P1 in the inlet 5, the force of the spring 20 moves the valve element 18 away from the throttling element 19, until it comes to rest against an intermediate wall 30 in which the valve seat 25 of the flow control valve 23 is formed. In this case the pressure P1 in the inlet 15 is the same as the pressure P2 in the intermediate region 22 and the valve element 18 is not able to move in a direction towards the throttling element 19 to control the differential pressure or pressure difference P2-P3 over the flow control valve 23. This situation can easily be detected by the Hall sensor 28 which outputs a corresponding signal to the controller 12 of the circulation pump 11. Therefore, the pump controller 11 is always aware of the differential pressure of all valve arrangement 7, 8, 9, more precisely it is aware of the fact whether the pressure P1 at the inlet 15 of each valve arrangement is sufficient to perform the differential pressure control function. The pressure of the circulation pump 11 can at all times be controlled to a level, where the heat exchanger valve means 7, 8, 9 with the lowest differential pressure just has enough differential pressure to control the flow. This will be dependent on the thermal load of the rooms to be heated by the heat exchangers 4, 5, 6.

The Hall sensor 28 can easily detect whether the valve element 18 can be moved by the pressure P2 in the intermediate region 22. If the differential pressure P2-P3 is smaller than a predetermined minimum value which corresponds to the minimum force of the spring 20, then no control of the differential pressure is possible. When using a Hall sensor 28 and a magnet 29 no pressure sensor or pressure switch is necessary. This would achieve the same result but would be less cost effective.

An additional benefit can be achieved since it is easier to debug the heating system. If, for example, debris has clocked in the feed line arrangement 2 the Hall sensor 28 of the valve arrangement 7, 8, 9 can help to identify the point of clocking.

The Hall sensors 28 of all valve arrangement 7, 8, 9 are connected to the controller 12 of the circulation pump 11. When the pressure of the circulation pump 11 is too low so that in at least one valve arrangement 7, 8, 9 no pressure control is possible which is detected by the Hall sensor 28 and the magnet 29 the pressure has to be increased. In a preferred embodiment, such pressure increase is made step by step or incrementally, wherein each increment corresponds to the predetermined minimum a value, which, in tem corresponds to the minimum force of the spring 20.

As described above, when the pressure P1 at the inlet 15 is too low the valve element 18 of the pressure control valve 17 comes to rest against the intermediate wall 30. When the pressure of the circulation pump 11 is increased sufficiently the valve element 18 will start to move away from the intermediate wall 20 in a direction to the throttling element 19. This movement is immediately detected by the Hall sensor 28 and signaled to the controller 12. If the controller 12 receives the information of all valve arrangements 7, 8, 9 that the respective valve element 18 is movable again and therefore able to perform the pressure control, the controller "notes" that the pressure of the circulation pump 11 is sufficient.

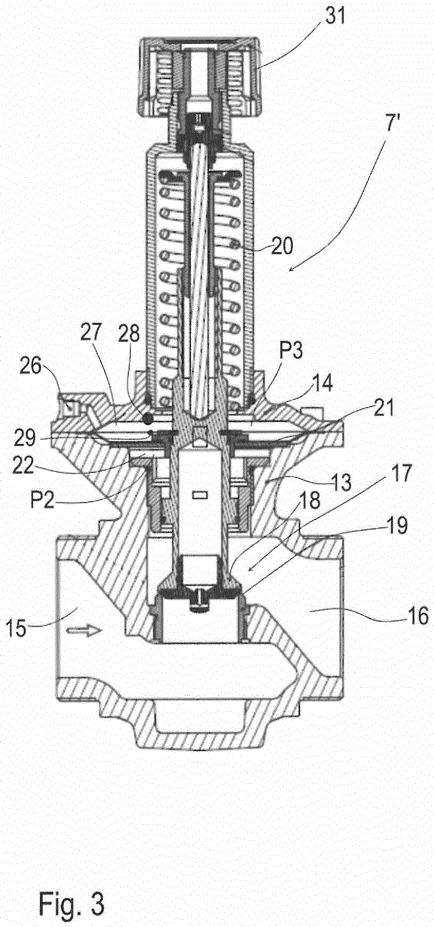

Fig. 3 shows another valve arrangement 7'. Elements corresponding to elements of Fig. 2 are designated with the same reference numerals.

The valve arrangement 7' of Fig. 3 comprises a pressure control valve 17 only. Such a valve is designed to maintain a constant set differential pressure. Via an internal connection and together with a spring 20 pressure in the outlet 16 acts on the underside of the membrane 21 while via an impulse tube 26 pressure in a flow pipe acts on the top of the membrane 21, i.e. in space 27. In this way the balancing valve maintains adjusted differential pressure.

This differential pressure can be adjusted by turning a knob 31 which changes the force of spring 20.

In this valve 7' as well there is a hall sensor 28 and a magnet 29 forming detecting means which are provided to detect whether a differential pressure adjusted by the valve arrangement 7' exceeds a predetermined minimum value.

## Claims

1. Heat exchanger valve arrangement having a pressure control valve (17), said pressure control valve (17) comprising a valve element (18) cooperating with a throttling element (19) and controlling a differential pressure (P2-P3), **characterized in that** detecting means (28, 29) are provided detecting whether said differential pressure (P2-P3) exceeds a predetermined minimum value.

2. Valve arrangement according to claim 1, **characterized in that** a flow control valve (23) is connected in series with said pressure control valve (17), said pressure control valve (17) controlling the differential pressure (P2-P3) over said flow control valve (23).

3. Valve arrangement according to claim 1 or 2, **characterized in that** said valve element (18) is loaded by a spring force of a spring (20) in one direction and by said differential pressure (P2-P3) in a direction opposite to the direction of the spring (20), wherein said minimum value creates a hydraulic force on said valve element (18) corresponding to a minimum of said spring force.

4. Valve arrangement according to any of claims 1 to 3, **characterized in that** said detecting means (28, 29) comprise a position sensor.

5. Valve arrangement according to claim 4, **characterized in that** said detecting means (28, 29) comprise a Hall sensor (28).

6. Valve arrangement according to claim 5, **characterized in that** said detecting means comprise a magnet (29), said magnet (29) being connected to said valve element (18).

7. Valve arrangement according to any of claims 4 to 6, **characterized in that** said position sensor outputs a maximum signal in case said valve element (18) has the largest possible distance from said throttling element (19).

8. Valve arrangement according to any of claims 1 to 7, **characterized in that** said valve element (18) is in form of a hollow piston connected to a membrane (21), an interior space of said piston forming an intermediate region (22), said membrane (21) being loaded by a pressure (P2) in said intermediate region (22) in a direction away from said throttling element (19) and by a pressure downstream said flow control valve (23) in a direction towards said throttling element (19).

9. Heating system (1) comprising a feed line arrangement (2), a return line arrangement (3) and a circulation pump means (11) controlled by a controller (12) and connected to said feed line arrangement (2), and at least two heat exchangers (4, 5, 6) connected to said feed line arrangement (2) and said return line arrangement (3), **characterized in that** each heat exchanger is provide with a valve arrangement (5, 6, 7) according to any of claims 1 to 8 and said detecting means (28, 29) are connected to said controller (12).

10. Method for operating a heating system (1), said heating system (1) comprising a feed line arrangement (2), a return line arrangement (3) and a circulation pump means (11) controlled by a controller (12) and connected to said feed line arrangement (2), and at least two heat exchangers (4, 5, 6) connected to said feed line arrangement (2) and said return line arrangement (3), **characterized in that** the pressure of said circulation pump (11) is lowered until a valve arrangement (5, 6, 7) according to any of claims 1 to 8 detects that said differential pressure (P2-P3) in this valve arrangement has fallen below said predetermined minimum value and then the pressure of said circulation pump (11) is increased by a predetermined pressure difference.

11. Method according to claim 10, **characterized in that** said pressure difference corresponds to said predetermined minimum value.

## Patentansprüche

1. Wärmetauscherventilanordnung, aufweisend ein Druckregelventil (17), wobei das Druckregelventil (17) ein Ventilelement (18) umfasst, das mit einem Drosselelement (19) zusammenwirkt und einen Differentialdruck (P2-P3) steuert, **dadurch gekennzeichnet, dass** Erkennungsmittel (28, 29) bereitgestellt sind, um zu erkennen, ob der Differentialdruck (P2-P3) einen vorbestimmten Mindestwert überschreitet.

2. Ventilanordnung nach Anspruch 1, **dadurch gekennzeichnet, dass** ein Strömungssteuerventil (23) in Reihe mit dem Drucksteuerventil (17) geschaltet ist, wobei das Drucksteuerventil (17) den Differentialdruck (P2-P3) in dem Strömungssteuerventil (23) steuert.

3. Ventilanordnung nach Anspruch 1 oder Anspruch 2, **dadurch gekennzeichnet, dass** das Ventilelement (18) durch eine Federkraft einer Feder (20) in einer Richtung und durch den Differentialdruck (P2-P3) in einer Richtung entgegengesetzt zu der Richtung der Feder (20) belastet ist, wobei der Mindestwert eine hydraulische Kraft am Ventilelement (18) erzeugt, die einem Minimum der Federkraft entspricht.

4. Ventilanordnung nach einem der Ansprüche 1 bis 3, **dadurch gekennzeichnet, dass** die Erkennungsmittel (28, 29) einen Positionssensor umfassen.

5. Ventilanordnung nach Anspruch 4, **dadurch gekennzeichnet, dass** die Erkennungsmittel (28, 29) einen Hall-Sensor (28) umfassen.

6. Ventilanordnung nach Anspruch 5, **dadurch gekennzeichnet, dass** die Erkennungsmittel einen Magneten (29) umfassen, wobei der Magnet (29) mit dem Ventilelement (18) verbunden ist.

7. Ventilanordnung nach einem der Ansprüche 4 bis 6, **dadurch gekennzeichnet, dass** der Positionssensor ein maximales Signal im Falle ausgibt, dass das Ventilelement (18) den größtmöglichen Abstand von dem Drosselelement (19) aufweist.

8. Ventilanordnung nach einem der Ansprüche 1 bis 7, **dadurch gekennzeichnet, dass** das Ventilelement (18) in Form eines Hohlkolbens vorliegt, das mit einer Membran (21) verbunden ist, wobei ein Innenraum des Kolbens einen Zwischenbereich (22) bildet, wobei die Membran (21) durch einen Druck (P2) im Zwischenbereich (22) in einer Richtung weg von dem Drosselelement (19) und durch einen Druck stromabwärts des Strömungssteuerungsventils (23) in einer Richtung zum Drosselelement (19) belastet wird.

9. Heizsystem (1), umfassend eine Zufuhrleitungsanordnung (2), eine Rückleitungsanordnung (3) und ein Zirkulationspumpenmittel (11), das durch eine Steuerung (12) gesteuert wird und mit der Zufuhrleitungsanordnung (2) verbunden ist, und mindestens zwei Wärmetauscher (4, 5, 6), die mit der Zufuhrleitungsanordnung (2) und der Rückleitungsanordnung (3) verbunden sind, **dadurch gekennzeichnet, dass** jeder Wärmetauscher mit einer Ventilanordnung (5, 6, 7) nach einem der Ansprüche 1 bis 8 bereitgestellt ist und die Erkennungsmittel (28, 29) mit der Steuerung (12) verbunden sind.

10. Verfahren zum Betreiben eines Heizsystems (1), wobei das Heizsystem (1) eine Zufuhrleitungsanordnung (2), eine Rückleitungsanordnung (3) und ein Zirkulationspumpenmittel (11), das durch eine Steuerung (12) gesteuert wird und mit der Zufuhrleitungsanordnung (2) verbunden ist, und mindestens zwei Wärmetauscher (4, 5, 6), die mit der Zufuhrleitungsanordnung (2) und der Rückleitungsanordnung (3) verbunden sind, umfasst, **dadurch gekennzeichnet, dass** der Druck der Zirkulationspumpe (11) verringert wird, bis eine Ventilanordnung (5, 6, 7) nach einem der Ansprüche 1 bis 8 erkennt, dass der Differentialdruck (P2-P3) in dieser Ventilanordnung unter den vorbestimmten Mindestwert gefallen ist und dann der Druck der Zirkulationspumpe (11) um eine vorbestimmte Druckdifferenz erhöht wird.

11. Verfahren nach Anspruch 10, **dadurch gekennzeichnet, dass** die Druckdifferenz dem vorbestimmten Mindestwert entspricht.

## Revendications

1. Agencement de soupape d'échangeur de chaleur comprenant un régulateur de pression (17), ledit régulateur de pression (17) comprenant un élément soupape (18) coopérant avec un élément d'étranglement (19) et régulant une pression différentielle (P2-P3), l'agencement étant **caractérisé en ce qu'**il comprend des moyens de détection (28, 29) pour détecter si ladite pression différentielle (P2-P3) dépasse une valeur minimale prédéterminée.

2. Agencement de soupape selon la revendication 1, **caractérisé en ce qu'**un régulateur de débit (23) est connecté en série audit régulateur de pression (17), ledit régulateur de pression (17) régulant la pression différentielle (P2-P3) sur ledit régulateur de débit (23).

3. Agencement de soupape selon la revendication 1 ou 2, **caractérisé en ce que** ledit élément soupape (18) est chargé par une force de ressort d'un ressort (20) dans une direction et par ladite pression différentielle (P2-P3) dans une direction opposée à la direction du ressort (20), ladite valeur minimale créant une force hydraulique sur ledit élément soupape (18) correspondant à un minimum de ladite force de ressort.

4. Agencement de soupape selon l'une quelconque des revendications 1 à 3, **caractérisé en ce que** lesdits moyens de détection (28, 29) comprennent un capteur de position.

5. Agencement de soupape selon la revendication 4, **caractérisé en ce que** lesdits moyens de détection (28, 29) comprennent un capteur Hall (28).

6. Agencement de soupape selon la revendication 5, **caractérisé en ce que** lesdits moyens de détection comprennent un aimant (29), ledit aimant (29) étant connecté audit élément soupape (18).

7. Agencement de soupape selon l'une quelconque des revendications 4 à 6, **caractérisé en ce que** ledit capteur de position émet un signal maximum lorsque ledit élément soupape (18) a la plus grande distance possible par rapport audit élément d'étranglement (19).

8. Agencement de soupape selon l'une quelconque des revendications 1 à 7, **caractérisé en ce que** ledit élément soupape (18) se présente sous la forme d'un piston creux connecté à une membrane (21), un espace intérieur dudit piston formant une région intermédiaire (22), ladite membrane (21) étant chargée par une pression (P2) dans ladite région intermédiaire (22) dans une direction opposée audit élément d'étranglement (19) et par une pression en aval dudit régulateur de débit (23) dans une direction orientée vers ledit élément d'étranglement (19).

9. Système de chauffage (1) comprenant un agencement de conduite d'alimentation (2), un agencement de conduite de retour (3) et un moyen faisant pompe de circulation (11) contrôlé par un contrôleur (12) et connecté audit agencement de conduite d'alimentation (2), et au moins deux échangeurs de chaleur (4, 5, 6) connectés en série audit agencement de conduite d'alimentation (2) et audit agencement de conduite de retour (3), **caractérisé en ce que** chaque échangeur de chaleur est muni d'un agencement de soupape (5, 6, 7) selon l'une quelconque des revendications 1 à 8 et **en ce que** lesdits moyens de détection (28, 29) sont connectés audit contrôleur (12).

10. Procédé d'utilisation d'un système de chauffage (1), ledit système de chauffage (1) comprenant un agencement de conduite d'alimentation (2), un agencement de conduite de retour (3) et un moyen faisant pompe de circulation (11) contrôlé par un contrôleur (12) et connecté audit agencement de conduite d'alimentation (2), et au moins deux échangeurs de chaleur (4, 5, 6) connectés en série audit agencement de conduite d'alimentation (2) et audit agencement de conduite de retour (3), **caractérisé en ce que** la pression de ladite pompe de circulation (11) est abaissée jusqu'à ce qu'un agencement de soupape (5, 6, 7) selon l'une quelconque des revendications 1 à 8 détecte que ladite pression différentielle (P2-P3) dans cet agencement de soupape a diminué au-dessous de ladite valeur minimale prédéterminée, puis que la pression de ladite pompe de circulation (11) est augmentée par une différence de pression prédéterminée.

11. Procédé selon la revendication 10, **caractérisé en ce que** ladite différence de pression correspond à ladite valeur minimale prédéterminée.
